# EUROPEAN PATENT SPECIFICATION

(11) **EP 2 126 359 B1**
(45) Date of publication and mention of the grant of the patent: **29.08.2018**
(21) Application number: 07865230.2
(22) Date of filing: 05.12.2007
(51) Int. Cl.: F04B 49/06, B60T 13/26, B60T 17/02

(54) **VARIABLE TORQUE TRANSMITTER**
GEBER FÜR VARIABLES DREHMOMENT
RENVOI À COUPLE VARIABLE

(30) Priority: 19.01.2007 US 624978
(43) Date of publication of application: 02.12.2009
(73) Proprietor: Bendix Commercial Vehicle Systems, LLC, Elyria, Ohio 44035 (US)
(72) Inventor: COLAVINCENZO, David, D., Castalia, OH 44824 (US)
(74) Representative: Gill Jennings & Every LLP
(86) International application number: PCT/US2007/086491
(87) International publication number: WO 2008/091442

(56) References cited:
- WO-A-00/23292
- DE-B1- 1 628 167
- US-A- 5 469 947
- US-B1- 6 408 621

## Description

### Background

The present invention relates to a vehicle compressor. It finds particular application in conjunction with controlling a speed of the vehicle compressor and will be described with particular reference thereto. It will be appreciated, however, that the invention is also amenable to other applications.

Air brake and other auxiliary systems requiring compressed air are known for tractor/trailer vehicles. In conventional tractor/trailer vehicles, the basic air system components include an air compressor with a governor valve, an air dryer, a supply reservoir tank, valves for controlling flow of the compressed air to the brake and other auxiliary systems, wheel mounted brakes and brake chambers, and other auxiliary systems. In an air brake system, for example, the compressor furnishes the compressed air for brake operation by taking free atmospheric air and compressing it to 100-120 psi (689.5-827.4kPa). The compressed air passes from the compressor into the reservoir where it is stored until it is needed. The compressed air is held in the reservoir until it is released by the operator via the air brake control valves. When the operator utilizes the air brake control valves, air flows to the brake chambers where its energy is transformed into the mechanical force and motion necessary to apply the brakes.

As the compressed air is used, the air supply systems require periodic recharging of the air supply reservoir. Under normal operating conditions the air compressor control system has a low limit pressure of about 100 psi (689.5kPa) and a high limit pressure of about 120 psi (827.4kPa). When the pressure in the supply reservoir tank drops below about 100 psi (689.5kPa), the system "loads" the air compressor and opens the governor valve.
When the pressure in the supply reservoir tank reaches about 120 psi (827.4kPa) the system "unloads" the air compressor and closes the governor valve.

In conventional systems, the compressor is driven by the engine and runs continuously along with the engine. As discussed above, the compressor is either loaded or unloaded as a function of the pressure in the air supply reservoir. While loaded, the compressor supplies compressed air to the compressed air system. While unloaded, the compressor continues to run, but vents the air it produces to atmosphere, or a separate volume, instead of supplying the compressed air to the compressed air system. Running the air compressor continuously with the engine contributes to additional wear and tear on the compressor. In addition, the speed at which the compressor runs at any point in time is determined as a fixed ratio of the speed at which the engine is running.

US 5469947 describes a fluid clutch device for controlling transmission of motive power of a vehicular engine to accessory equipment such as an air compressor. The clutch casing is filled with an electroviscous fluid whose viscosity changes with an applied voltage regulated by a clutch control unit based on information from information generating units.

The present invention provides a new and improved apparatus and method which addresses the above-referenced problems.

### SUMMARY

A vehicle air compressor controller includes a compressor electronic control unit (ECU) receiving a plurality of signals representing respective vehicle parameters. The controller provides load-unload control of a compressor of the vehicle. A variable torque transmitter is controlled by the compressor electronic control unit. The variable torque transmitter receives an engine speed from an engine of the vehicle and delivers a variable torque to the compressor of the vehicle for controlling a speed of the compressor. The variable torque transmitter includes a valve, controlled by the ECU, delivering a fluid to a control cylinder associated with a clutch piston. The variable torque is determined as a function of the engine speed, the vehicle parameters and the amount of fluid in the clutch piston.

### BRIEF DESCRIPTION OF THE DRAWINGS

In the accompanying drawings which are incorporated in and constitute a part of the specification, embodiments of the invention are illustrated, which, together with a general description of the invention given above, and the detailed description given below, serve to exemplify the embodiments of this invention.
**FIGURE 1** illustrates a schematic representation of a vehicle air compressor controller system in accordance with one embodiment of an apparatus illustrating principles of the present invention;
**FIGURE 2** illustrates a schematic representation of a vehicle air compressor controller system in accordance with one embodiment of the apparatus shown in **FIGURE 1****;**
**FIGURE 3** illustrates graph showing compressor speed and clutch slippage versus engine speed one example of a vehicle air compressor controller system; and
**FIGURE 4** illustrates a schematic representation of a vehicle air compressor controller system in accordance with another embodiment of the apparatus shown in **FIGURE 1****.**

### Detailed Description of Illustrated Embodiment

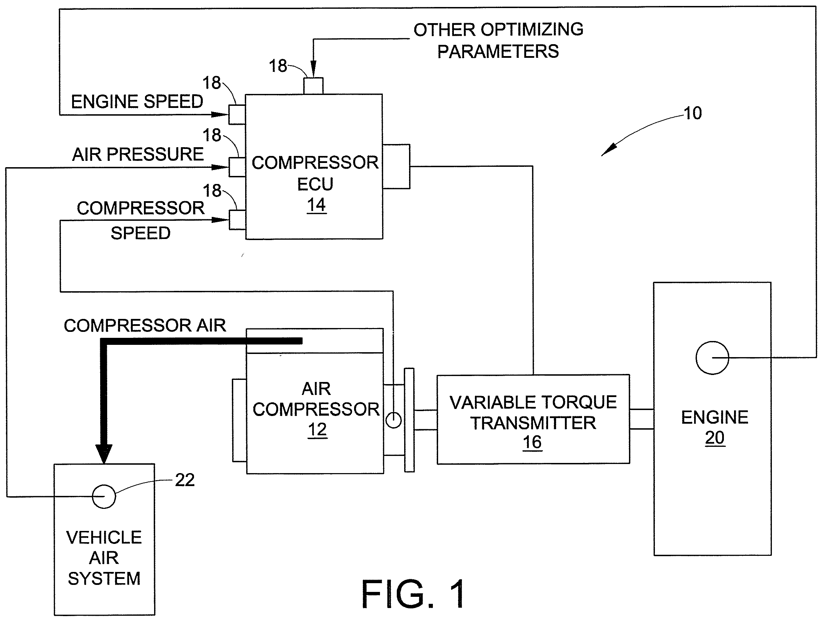

With reference to **FIGURE 1****,** a simplified component diagram of an exemplary vehicle air compressor controller system **10** is illustrated in accordance with one embodiment of an apparatus illustrating principles of the present invention. The vehicle air compressor controller system **10** includes a compressor **12** (e.g., an air compressor), a compressor electronic control unit (ECU) **14,** and a variable torque transmitter **16.** The ECU **14** controlling the compressor **12** (and the variable torque transmitter **16**) may alternatively be one of a number of ECUs on the vehicle, e.g., the engine ECU. The variable torque transmitter **16** acts as a means for delivering a variable torque to the compressor **12** for controlling a speed of the compressor **12.**

The compressor ECU **14** receives a plurality of signals representing respective vehicle parameters. Respective inputs **18** (e.g., electrical inputs) on the compressor ECU **14** act as means for providing the vehicle parameter signals to the compressor ECU **14.** For example, in one embodiment, the compressor ECU **14** receives electronic signals representing a speed at which an associated engine **20** is driving the variable torque transmitter **16** (i.e., the driving speed), an actual speed at which the compressor **12** is reciprocating (i.e., the actual speed), and a pressure in an associated air tank **22** that is filled with compressed air produced by the compressor **12.** The speed at which the associated engine **20** is driving the variable torque transmitter **16** is proportional to a compressor drive ratio. More specifically, the driving speed is calculated by multiplying the engine speed by a compressor drive ratio. Other vehicle parameters that may be used in the present invention include, for example, transmission retarder status, engine brake status, engine load status, vehicle speed, engine torque, engine oil temperature, engine start sequence, air suspension status, emission control devices, and/or other vehicle parameters defined in the SAE J1939 Data Link standard.

The variable torque transmitter **16** receives the engine speed from the associated engine **20.** The compressor ECU **14** controls the variable torque transmitter **16** to deliver a variable torque to the compressor **12** for controlling the actual speed at which the compressor **12** reciprocates. More specifically, the compressor ECU **14** transmits a control signal (e.g., an electronic signal) to the variable torque transmitter **16** to manage a proportion of the driving speed that is transmitted to the compressor **12.** In other words, the actual speed is a function of the driving speed (engine torque). The actual speed is also a function of the compressor drive ratio. In addition to being determined as a function of the driving speed, the actual speed is also determined as a function of the vehicle parameters.

In one embodiment, the variable torque transmitter **16** is a clutch. An amount of the clutch engagement determines the proportion of the driving speed that is transmitted to the compressor **12.** The amount of clutch engagement is determined as a function of the engine speed and the vehicle parameters. In one embodiment, it is contemplated that the clutch is a slipping (wet) clutch, while in another embodiment the clutch is a dry clutch.

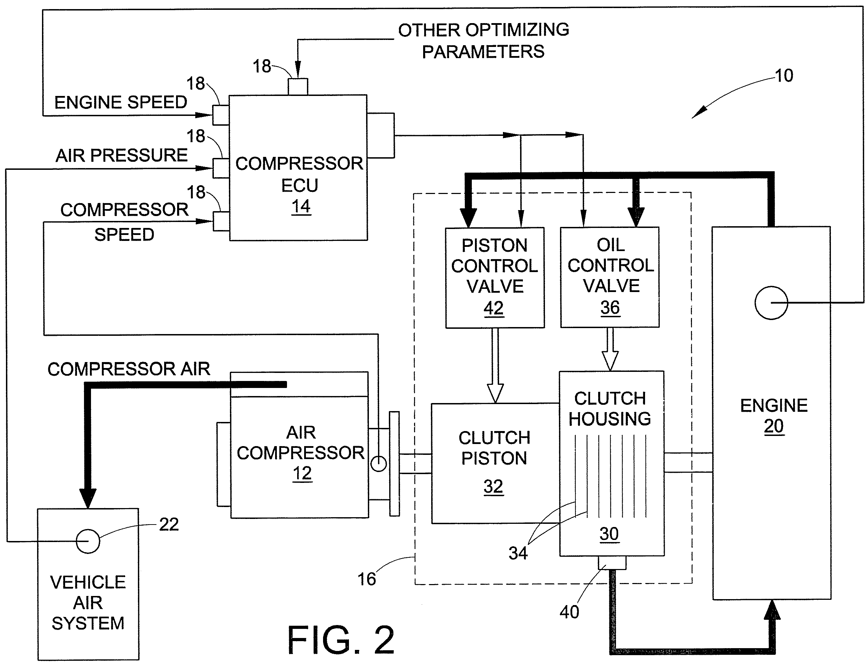

With reference to **FIGURE 2****,** the variable torque transmitter **16** is illustrated as a wet clutch in accordance with one embodiment of an apparatus illustrating principles of the present invention. In the illustrated embodiment, the variable torque transmitter (wet clutch) **16** includes a clutch housing **30** and a clutch piston **32.** The clutch housing **30** includes a plurality of clutch plates **34,** which engage each other as a function of pressure supplied by the clutch piston **32.**

A first supply valve **36** is controlled by the compressor ECU **14** for delivering a cooling fluid to the clutch housing **30** for reducing heat generated between the clutch plates **34.** It is contemplated that the compressor ECU **14** transmits an electronic signal for controlling the first supply valve **36;** however, other signals (e.g., pneumatic signals) are also contemplated. In the illustrated embodiment, the cooling fluid is oil supplied from the engine **20,** which is also recycled to the engine **20.** However, it is also contemplated that the cooling fluid may be a gas (e.g., air), oil from a source independent of the engine, or some liquid that is not oil.

It is to be understood that viscous forces are created in the clutch housing **30** when a cooling fluid such as engine oil is present. Such viscous forces may be advantageous to help drive the compressor **12** when the clutch plates **34** are engaged. In other words, the viscous forces help increase the torque delivered to the compressor **12.** However, the same viscous forces may create a drag on the engine **20** when the clutch plates **34** are disengaged from each other. Therefore, it is contemplated that the cooling fluid be reduced or drained from the clutch housing **30** when the clutch plates **34** are disengaged from each other. In that regard, a drain means **40** is used for controlling the removal of the cooling fluid from the clutch housing **30.**

In one embodiment, the drain means **40** is a valve, which is controlled by the compressor ECU **14,** for controlling the level of the cooling fluid in the clutch housing **30.** More specifically, the compressor ECU **14** transmits a signal (e.g., an electronic or pneumatic signal) for opening/closing the drain valve **40** as a function of whether the clutch plates **34** are engaged/disengaged from each other.

In another embodiment, the drain means **40** is an orifice, which is always open and, therefore, not controlled by the compressor ECU **14.** The orifice is sized for causing the cooling fluid to slowly and constantly bleed from the clutch housing **30.**

A second supply valve **42,** which is also controlled by the compressor ECU **14,** delivers a fluid to a control cylinder associated with the clutch piston **32.** The engagement/disengagement between the clutch plates **34** is controlled as a function of the amount of fluid in the clutch piston **32.** More specifically, if the amount of fluid in the control cylinder of the clutch piston **32** is below a threshold level, the clutch plates **34** are disengaged from each other. Once the amount of fluid in the control cylinder of the clutch piston **32** reaches a threshold level, the clutch plates **34** become engaged with each other. However, at the threshold level of fluid, a maximum amount of slippage between the clutch plates **34** exists. The amount of slippage between the clutch plates **34** decreases as the amount of fluid in the control cylinder of the clutch piston **32** is increased.

In the illustrated embodiment, the fluid is oil supplied from the engine **20.** However, it is also contemplated that the fluid may be a gas (e.g., air), oil from a source independent of the engine, hydraulic fluid, or some other liquid.

During use, if the pressure in the air tank **22** drops below a cut-in pressure (e.g., 110 psi, 758.4kPa), the compressor ECU **14** determines more pressure is needed in the air tank **22.** Therefore, the compressor ECU **14** signals the second supply valve **42** to open so that the fluid flows into the control cylinder associated with the clutch piston **32.** Once the fluid flows into the control cylinder, the clutch plates **34** begin to engage each other. As discussed above, the level of engagement between the clutch plates **34** (e.g., slippage) is a function of the level of the fluid in the control cylinder. At the same time, if the plates **34** are slipping, the compressor ECU **14** signals the first supply valve to open so that the cooling fluid flows into the clutch housing **32.** If the drain means **40** is a valve, the compressor ECU **14** also closes that valve **40** to increase the cooling fluid level in the clutch housing **30;** otherwise, the cooling fluid slowly begins to bleed from the clutch housing **30** via the orifice.

Once the plates **34** are no longer slipping, the compressor ECU **14** causes the first supply valve **36** to close (and the drain valve **40** to open) so that the cooling fluid drains from the clutch housing **30.**

In one example, if the engine **20** is idling at 700 rpm and the compressor drive ratio is 2.5:1, the driving speed is 1,750 rpm (i.e., 700 rpm x 2.5). If the actual speed of the compressor is less than a predetermined target speed of the compressor (e.g., 2,500 rpm), the compressor ECU **14** signals the second supply valve **42** to increase the level of fluid in the control cylinder of the clutch piston **32** to increase the torque transmitted to driving the compressor **12.**

The amount of fluid in the control cylinder of the clutch piston **32** is increased until the target compressor driven speed is reached. However, in this case, even if the maximum amount of fluid is introduced into the control cylinder so that the pressure between the clutch plates **34** is maximized, the target compressor driven speed cannot be achieved because driving speed is less than the target compressor driven speed. Therefore, once the maximum amount of fluid flows into the control cylinder, no slippage exists between the clutch plates **34.** Consequently, the cooling fluid is reduced in the clutch housing **30.** The clutch remains engaged in this manner until the pressure in the reservoir tank reaches a governed pressure (e.g., 130 psi, 896.3kPa), at which time the second supply valve **42** is closed.

Because the clutch is capable of slipping to limit the actual driven speed of the compressor **12,** higher compressor drive ratios (and driving speeds) may be used. Consequently, the compressor duty cycle at relatively low engine speeds (e.g., idling) may be minimized.

In another example, if the engine **20** is running at a higher speed than described above (e.g., the engine **20** is running at 2,100 rpm), and the pressure in the air tank **22** is again below the cut-in pressure, the compressor ECU **14** signals the second supply valve **42** to increase the level of fluid in the control cylinder to increase the torque transmitted to driving the compressor **12.** Since the engine speed is 2,100 rpm, the driving speed is 5,250 rpm (i.e., 2,100 rpm x 2.5). It is assumed that the actual compressor driven speed is initially less than the driving speed. Therefore, the compressor ECU **14** signals the second supply valve **42** to continue providing the fluid to the control cylinder so that the clutch control pressure increases until the target compressor driven speed (e.g., 2,500 rpm) is achieved.

It is to be understood that the driving speed is a function of engine speed (motor speed). The driving speed could also be determined via a power take-off from, for example, a transmission.

Since the driving speed (5,250 rpm) is greater than the target compressor driven speed (2,500 rpm), slippage between the clutch plates **34** is required to maintain the target compressor speed (so that the compressor **12** does not run too fast). Therefore, the first supply valve **36** is opened to maximize cooling fluid in the clutch housing **30.** Operation in this manner is maintained until the pressure in the air tank **22** reaches the governed pressure, at which time the first and second supply valves **36, 42** are closed and the fluid drains from the control cylinder.

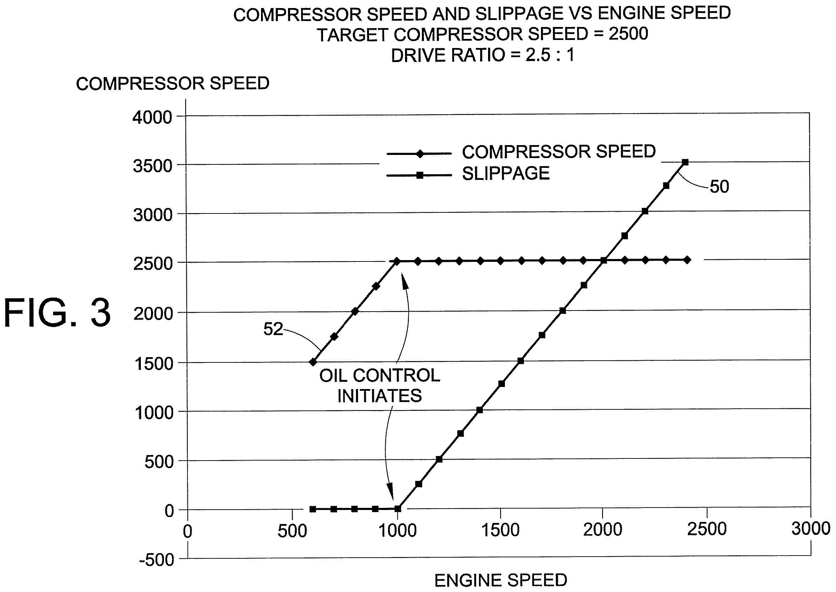

**FIGURE 3** is a graph including lines illustrating compressor speed **50** and slippage **52** versus engine speed for the second example discussed above (e.g., a target compressor speed of 2,500 rpm and a drive ratio of 2.5:1).

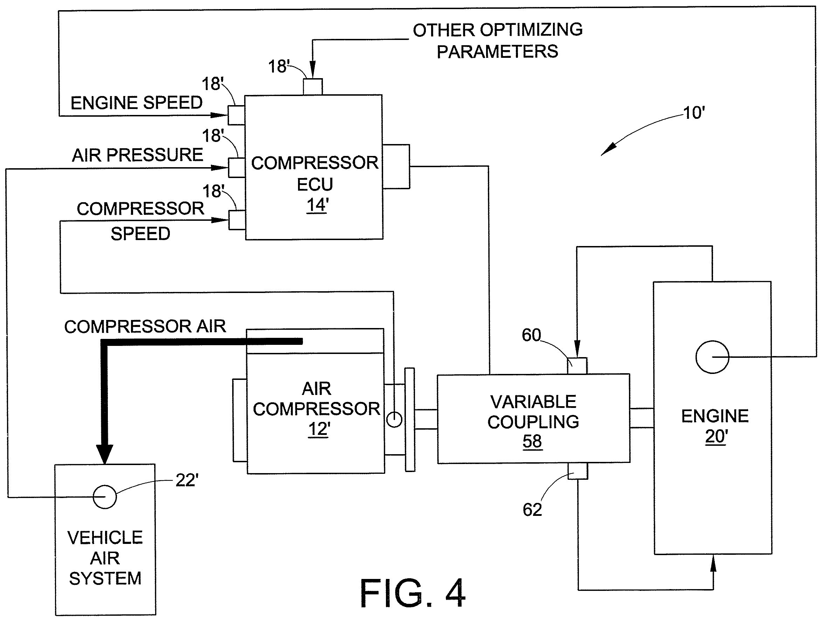

**FIGURE 4** illustrates a second embodiment of the vehicle air compressor controller system. For ease of understanding this embodiment of the present invention, like components are designated by like numerals with a primed (') suffix and new components are designated by new numerals. In this embodiment, the variable torque transmitter **16** (see **FIGURES 1** **and** **2**) is illustrated as a variable coupling **58.** The compressor ECU **14'** controls a supply valve **60** that supplies a fluid (e.g., oil, hydraulic fluid, etc.) to the variable coupling **58** and a drain valve **62** that reduces the fluid in the variable coupling **58.** The compressor ECU **14'** controls the supply valve **60** and the drain valve **62** to maintain the fluid in the variable coupling **58** in a manner described above with respect to **FIGURE 2****.**

In one embodiment, the variable coupling **58** illustrated in **FIGURE 4** is a viscous coupling. In this embodiment, the fluid in the coupling **58** is relatively viscous. In addition, torque is transmitted through internal friction of the viscous fluid and adhesion of the viscous fluid to the inner surfaces of the variable coupling **58.**

In another embodiment, the variable coupling **58** illustrated in **FIG. 4** is a hydro-dynamic coupling (e.g., a torque converter). In this embodiment, the fluid moving through the variable coupling **58** is used for transmitting torque to the compressor **12'.**

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects is defined by the appended claims, and is not limited to the specific details, the representative apparatus, and illustrative examples shown and described.

## Claims

1. A vehicle air compressor controller, comprising:
an electronic control unit 'ECU' (14) adapted to receive a plurality of signals representing respective vehicle parameters and control a compressor (12); and
a variable torque transmitter (16), controlled by the ECU (14), receiving an engine speed from an engine of the vehicle and delivering a variable torque to the compressor (12) of the vehicle for controlling a speed of the compressor (12),
**characterized in that**:
the vehicle air compressor controller provides load-unload control of the compressor (12); and,
the variable torque transmitter (16) includes a valve (42), controlled by the ECU (14), delivering a fluid to a control cylinder associated with a clutch piston (32), the variable torque being determined as a function of the engine speed, the vehicle parameters, and the amount of fluid in the clutch piston (32).

2. The vehicle air compressor controller as set forth in claim 1, wherein the variable torque transmitter (16) includes:
a clutch including clutch plates (34) engaged as a function of the engine speed, the vehicle parameters, and the amount of fluid in the clutch piston (32), the variable torque delivered to the compressor (12) being determined as a function of the engagement of the clutch plates (34).

3. The vehicle air compressor controller as set forth in claim 2, wherein the engagement of the clutch plates (34) increases as the amount of fluid in the clutch piston (32) increases.

4. The vehicle air compressor controller as set forth in claim 3, further including:
another valve (36) controlled by the ECU (14) for delivering a cooling fluid to the clutch as a function of a slippage of the clutch.

5. The vehicle air compressor controller as set forth in claim 4, wherein:
the cooling fluid is oil; and
viscous forces created by the oil on the clutch increase the torque delivered to the compressor (12).

6. The vehicle air compressor controller as set forth in any of the preceding claims 2-5 wherein:
the fluid delivered by the valve (42) to the control cylinder controls a slippage of the clutch plates (34).

7. The vehicle air compressor controller as set forth in claim 1, wherein the variable torque transmitter (16) includes:
a viscous coupling between clutch plates (34), a level of the viscous coupling being determined as a function of the engine speed, the vehicle parameters, and the amount of fluid in the clutch piston (32), the variable torque delivered to the compressor (12) being determined as a function of the level of the viscous coupling.

8. The vehicle air compressor controller as set forth in claim 1, wherein:
the ECU (14) controls the variable torque transmitter (16) to substantially maintain the compressor (12) at as close to a target compressor driven speed as possible while the variable torque transmitter (16) is delivering torque to the compressor (12).

9. The vehicle air compressor controller as set forth in claim 8, wherein a compressor drive ratio permits the compressor (12) to run at the target compressor driven speed while the engine (20) of the vehicle is idling.

10. The vehicle air compressor controller as set forth in claim 1, wherein:
the vehicle parameters include the speed of the engine (20), the speed of the compressor (12), and a pressure of an air tank; and
if the pressure of the air tank is below a cut-in pressure and the speed of the compressor (12) is below a target compressor driven speed, the variable torque to the compressor (12) is increased until one of i) the speed of the compressor (12) reaches the target compressor driven speed and ii) the pressure in the air tank reaches a governed pressure.

11. A method of varying a torque to a vehicle compressor (12), the method comprising:
receiving a plurality of signals representing vehicle parameters into a compressor electronic control unit 'ECU' (14);
receiving an engine speed from an engine (20) of the vehicle into a variable torque transmitter (16); and
delivering a variable torque to a compressor (12) of the vehicle for controlling a speed of the compressor (12),
**characterized by**:
controlling load-unload of the compressor (12); and
controlling a valve (42) by the ECU (14) to deliver a fluid to a control cylinder associated with a clutch piston (32), the variable torque being determined as a function of the engine speed, the vehicle parameters, and the amount of fluid in the clutch piston (32).

12. The method of varying a torque to a vehicle compressor (12) as set forth in claim 11:
wherein the delivering step includes:
engaging a clutch as a function of the engine speed and the vehicle parameters; and
further including:
if a driven speed of the compressor (12) is less than a driving speed of the clutch, supplying a cooling fluid to the clutch.

13. The method of varying a torque to a vehicle compressor (12) as set forth in claim 11, further including:
measuring the vehicle parameters including a speed of the engine, the speed of the compressor (12), and a pressure of an air tank.

14. The method of varying a torque to a vehicle compressor (12) as set forth in claim 13, further including:
once a governed pressure in the air tank is reached, stopping the compressor (12).

15. The method of varying a torque to a vehicle compressor (12) as set forth in claim 11, further including:
maintaining the compressor (12) as close to a target compressor driven speed as possible while the variable torque transmitter (16) is delivering torque to the compressor (12) .

## Patentansprüche

1. Steuergerät für Fahrzeug-Luftkompressor, umfassend:
ein elektronisches Steuergerät "ECU" (14), das dafür ausgelegt ist, mehrere Signale zu empfangen, die entsprechende Fahrzeugparameter repräsentieren, und einen Kompressor (12) zu steuern; und
einen Geber für variables Drehmoment (16), der vom ECU (14) gesteuert wird, eine Motordrehzahl von einem Motor des Fahrzeugs empfängt und ein variables Drehmoment an den Kompressor (12) des Fahrzeugs liefert, um eine Drehzahl des Kompressors (12) zu steuern,
**dadurch gekennzeichnet, dass**:
das Steuergerät für den Fahrzeug-Luftkompressor eine Lade-/Entladesteuerung des Kompressors (12) bereitstellt und
der Geber für variables Drehmoment (16) ein Ventil (42) beinhaltet, das vom ECU (14) gesteuert wird und ein Fluid an einen Steuerzylinder abgibt, der mit einem Kupplungskolben (32) verknüpft ist, wobei das variable Drehmoment als Funktion der Motordrehzahl, der Fahrzeugparameter und der Menge des Fluids im Kupplungskolben (32) bestimmt wird.

2. Steuergerät für Fahrzeug-Luftkompressor gemäß Anspruch 1, wobei der Geber für variables Drehmoment (16) Folgendes beinhaltet:
eine Kupplung einschließlich Kupplungsscheiben (34), die als Funktion der Motordrehzahl, der Fahrzeugparameter und der Menge des Fluids im Kupplungskolben (32) in Eingriff kommen, wobei das variable Drehmoment, das an den Kompressor (12) abgegeben wird, als eine Funktion des Im-Eingriff-Seins der Kupplungsscheiben (34) bestimmt wird.

3. Steuergerät für Fahrzeug-Luftkompressor gemäß Anspruch 2, wobei sich das In-Eingriff-Sein der Kupplungsscheiben (34) steigert, wenn sich die Menge des Fluids im Kupplungskolben (32) steigert.

4. Steuergerät für Fahrzeug-Luftkompressor gemäß Anspruch 3, ferner beinhaltend:
ein anderes Ventil (36), das vom ECU (14) gesteuert wird, um als Funktion eines Schlupfs der Kupplung ein Kühlfluid an die Kupplung abzugeben.

5. Steuergerät für Fahrzeug-Luftkompressor gemäß Anspruch 4, wobei:
das Kühlfluid Öl ist und
viskose Reibungskräfte, die vom Öl auf der Kupplung erzeugt werden, das Drehmoment steigern, das an den Kompressor (12) abgegeben wird.

6. Steuergerät für Fahrzeug-Luftkompressor gemäß einem der vorhergehenden Ansprüche 2 bis 5, wobei:
das vom Ventil (42) an den Steuerzylinder abgegebene Fluid einen Schlupf der Kupplungsscheiben (34) steuert.

7. Steuergerät für Fahrzeug-Luftkompressor gemäß Anspruch 1, wobei der Geber für variables Drehmoment (16) Folgendes beinhaltet:
eine viskose Kopplung zwischen den Kupplungsscheiben (34), wobei ein Grad der viskosen Kopplung als eine Funktion der Motordrehzahl, der Fahrzeugparameter und der Menge des Fluids im Kupplungskolben (32) bestimmt wird, wobei das variable Drehmoment, das an den Kompressor (12) abgegeben wird, als eine Funktion des Grads der viskosen Kopplung bestimmt wird.

8. Steuergerät für Fahrzeug-Luftkompressor gemäß Anspruch 1, wobei:
das ECU (14) den Geber für variables Drehmoment (16) steuert, um den Kompressor (12) im Wesentlichen so nahe an einer Zieldrehzahl des angetriebenen Kompressors wie möglich zu halten, während der Geber für variables Drehmoment (16) Drehmoment an den Kompressor (12) abgibt.

9. Steuergerät für Fahrzeug-Luftkompressor gemäß Anspruch 8, wobei eine Kompressorantriebsübersetzung ermöglicht, dass der Kompressor (12) mit der Zieldrehzahl des angetriebenen Kompressors läuft, während sich der Motor (20) im Leerlauf befindet.

10. Steuergerät für Fahrzeug-Luftkompressor gemäß Anspruch 1, wobei:
die Fahrzeugparameter die Drehzahl des Motors (20), die Drehzahl des Kompressors (12) und einen Druck eines Luftbehälters beinhalten und
wenn der Druck im Luftbehälter unter einem Einschaltdruck liegt und die Drehzahl des Kompressors (12) unter einer Zieldrehzahl des angetriebenen Kompressors liegt, das an den Kompressor (12) abgegebene variable Drehmoment gesteigert wird, bis entweder i) die Drehzahl des Kompressors (12) die Zieldrehzahl des angetriebenen Kompressors erreicht oder ii) der Druck im Luftbehälter einen Regeldruck erreicht.

11. Verfahren zum Variieren eines an einen Fahrzeugkompressor (12) abgegebenen Drehmoments, umfassend:
Empfangen von mehreren Fahrzeugparameter repräsentierenden Signalen in einem elektronischen Kompressorsteuergerät "ECU" (14);
Empfangen einer Motordrehzahl von einem Motor (20) des Fahrzeugs in einem Geber für variables Drehmoment (16) und
Abgeben eines variablen Drehmoments an einen Kompressor (12) des Fahrzeugs, um eine Drehzahl des Kompressors (12) zu steuern,
**gekennzeichnet durch**:
Steuern des Ladens/Entladens des Kompressors (12) und
Steuern eines Ventils (42) durch das ECU (14), um ein Fluid an einen mit einem Kupplungskolben (32) verknüpften Steuerzylinder abzugeben, wobei das variable Drehmoment als eine Funktion der Motordrehzahl, der Fahrzeugparameter und der Menge des Fluids im Kupplungskolben (32) bestimmt wird.

12. Verfahren zum Variieren eines an einen Fahrzeugkompressor (12) abgegebenen Drehmoments gemäß Anspruch 11:
wobei der Schritt des Abgebens beinhaltet:
In-Eingriff-Bringen einer Kupplung als Funktion der Motordrehzahl und der Motorparameter; und
ferner beinhaltend:
wenn eine Drehzahl des angetriebenen Kompressors (12) kleiner ist als eine Antriebsdrehzahl der Kupplung, Zuführen eines Kühlfluids zur Kupplung.

13. Verfahren zum Variieren eines an einen Fahrzeugkompressor (12) abgegebenen Drehmoments gemäß Anspruch 11, ferner beinhaltend:
Messen der Fahrzeugparameter einschließlich einer Drehzahl des Motors, der Drehzahl des Kompressors (12) und eines Drucks eines Luftbehälters.

14. Verfahren zum Variieren eines an einen Fahrzeugkompressor (12) abgegebenen Drehmoments gemäß Anspruch 13, ferner beinhaltend:
wenn ein Regeldruck im Luftbehälter erreicht ist, Stoppen des Kompressors (12).

15. Verfahren zum Variieren eines an einen Fahrzeugkompressor (12) abgegebenen Drehmoments gemäß Anspruch 11, ferner beinhaltend:
Halten des Kompressors (12) auf einer Drehzahl, die möglichst nahe an einer Zieldrehzahl des angetriebenen Kompressors liegt, während der Geber für variables Drehmoment (16) Drehmoment an den Kompressor (12) abgibt.

## Revendications

1. Dispositif de commande de compresseur d'air de véhicule, comprenant :
une unité de commande électronique « ECU » (14) conçue pour recevoir une pluralité de signaux représentant des paramètres de véhicule respectifs et commander un compresseur (12) ; et
un renvoi à couple variable (16), commandé par l'ECU (14), lequel reçoit une vitesse de moteur en provenance d'un moteur du véhicule et qui délivre un couple variable au compresseur (12) du véhicule pour commander une vitesse du compresseur (12),
**caractérisé en ce que** :
le dispositif de commande de compresseur d'air de véhicule procure une commande de charge-décharge du compresseur (12) ; et
le renvoi à couple variable (16) inclut une soupape (42), commandée par l'ECU (14), délivrant un fluide à un cylindre de commande associé à un piston d'embrayage (32), le couple variable étant déterminé en fonction de la vitesse de moteur, des paramètres de véhicule, et de la quantité de fluide dans le piston d'embrayage (32).

2. Dispositif de commande de compresseur d'air de véhicule tel qu'énoncé dans la revendication 1, dans lequel le renvoi à couple variable (16) inclut :
un embrayage incluant des plateaux d'embrayage (34) mis en prise en fonction de la vitesse de moteur, des paramètres de véhicule, et de la quantité de fluide dans le piston d'embrayage (32), le couple variable délivré au compresseur (12) étant déterminé en fonction de la mise en prise des plateaux d'embrayage (34).

3. Dispositif de commande de compresseur d'air de véhicule tel qu'énoncé dans la revendication 2, dans lequel la mise en prise des plateaux d'embrayage (34) augmente au fur et à mesure que la quantité de fluide dans le piston d'embrayage (32) augmente.

4. Dispositif de commande de compresseur d'air de véhicule tel qu'énoncé dans la revendication 3, incluant en outre :
une autre soupape (36) commandée par l'ECU (14) pour délivrer un fluide de refroidissement à l'embrayage en fonction d'un patinage de l'embrayage.

5. Dispositif de commande de compresseur d'air de véhicule tel qu'énoncé dans la revendication 4, dans lequel :
le fluide de refroidissement est l'huile ; et
des forces visqueuses créées par l'huile sur l'embrayage augmentent le couple délivré au compresseur (12) .

6. Dispositif de commande de compresseur d'air de véhicule tel qu'énoncé dans l'une quelconque des revendications précédentes 2-5, dans lequel :
le fluide délivré par la soupape (42) au cylindre de commande commande un patinage des plateaux d'embrayage (34) .

7. Dispositif de commande de compresseur d'air de véhicule tel qu'énoncé dans la revendication 1, dans lequel le renvoi à couple variable (16) inclut :
un couplage visqueux entre des plateaux d'embrayage (34), un niveau du couplage visqueux étant déterminé en fonction de la vitesse de moteur, des paramètres de véhicule, et de la quantité de fluide dans le piston d'embrayage (32), le couple variable délivré au compresseur (12) étant déterminé en fonction du niveau du couplage visqueux.

8. Dispositif de commande de compresseur d'air de véhicule tel qu'énoncé dans la revendication 1, dans lequel :
l'ECU (14) commande le renvoi à couple variable (16) afin de maintenir sensiblement le compresseur (12) aussi proche que possible d'une vitesse menée cible de compresseur pendant que le renvoi à couple variable (16) est en train de délivrer un couple au compresseur (12).

9. Dispositif de commande de compresseur d'air de véhicule tel qu'énoncé dans la revendication 8, dans lequel un rapport d'entraînement de compresseur permet au compresseur (12) de fonctionner à la vitesse menée cible de compresseur pendant que le moteur (20) du véhicule tourne au ralenti.

10. Dispositif de commande de compresseur d'air de véhicule tel qu'énoncé dans la revendication 1, dans lequel :
les paramètres de véhicule incluent la vitesse du moteur (20), la vitesse du compresseur (12) et une pression d'un réservoir d'air ; et
si la pression du réservoir d'air est inférieure à une pression de conjonction et la vitesse du compresseur (12) est inférieure à une vitesse menée cible de compresseur, le couple variable se rendant au compresseur (12) est augmentée jusqu'à ce que l'une parmi i) la vitesse du compresseur (12) atteigne la vitesse menée cible de compresseur, et ii) la pression dans le réservoir d'air atteigne une pression pilotée.

11. Procédé permettant de varier un couple se rendant à un compresseur (12) de véhicule, le procédé comprenant les opérations consistant à :
recevoir une pluralité de signaux représentant des paramètres de véhicule dans une unité de commande électronique « ECU » (14) de compresseur ;
recevoir une vitesse de moteur en provenance d'un moteur (20) du véhicule dans un renvoi à couple variable (16) ; et
délivrer un couple variable à un compresseur (12) du véhicule pour commander une vitesse du compresseur (12),
**caractérisé par** :
la commande de charge-décharge du compresseur (12) ; et
la commande d'une soupape (42), par l'ECU (14), pour délivrer un fluide à un cylindre de commande associé à un piston d'embrayage (32), le couple variable étant déterminé en fonction de la vitesse de moteur, des paramètres de véhicule, et de la quantité de fluide dans le piston d'embrayage (32).

12. Procédé permettant de varier un couple se rendant à un compresseur (12) de véhicule, tel qu'énoncé dans la revendication 11 :
dans lequel l'étape de délivrance inclut :
la mise en prise d'un embrayage en fonction de la vitesse de moteur et des paramètres de véhicule ; et
inclut en outre :
si une vitesse menée du compresseur (12) est inférieure à une vitesse d'entraînement de l'embrayage, la fourniture d'un fluide de refroidissement à l'embrayage.

13. Procédé permettant de varier un couple se rendant à un compresseur (12) de véhicule, tel qu'énoncé dans la revendication 11, incluant en outre l'opération consistant à :
mesurer les paramètres de véhicule incluant une vitesse du moteur, la vitesse du compresseur (12), et une pression d'un réservoir d'air.

14. Procédé permettant de varier un couple se rendant à un compresseur (12) de véhicule, tel qu'énoncé dans la revendication 13, incluant en outre l'opération consistant à :
une fois que la pression pilotée dans le réservoir d'air est atteinte, arrêter le compresseur (12).

15. Procédé permettant de varier un couple se rendant à un compresseur (12) de véhicule, tel qu'énoncé dans la revendication 11, incluant en outre l'opération consistant à :
maintenir le compresseur (12) aussi proche que possible d'une vitesse menée cible de compresseur pendant que le renvoi à couple variable (16) est en train de délivrer un couple au compresseur (12).
